# EUROPEAN PATENT APPLICATION

(11) **EP 0 817 451 A2**
(43) Date of publication of application: **07.01.1998**
(21) Application number: 97110407.0
(22) Date of filing: 25.06.1997
(51) Int. Cl.: H04M 3/42, H04M 3/50

(54) **Network-based on-demand multiparty multimedia call set up and directory service**

(30) Priority: 27.06.1996 US 671223
(71) Applicant: AT&T Corp., New York, NY 10013-2412 (US)
(72) Inventor: Bruno, Richard Frank, Morristown, N.J. 07960 (US); Markowitz, Robert Edward, Glen Rock, N.J. 07452 (US); Nurenberg, Steven Howard, Manalapan, N.J. 07726 (US); O'Neil, Joseph Thomas, Staten Island, N.Y. 10312 (US); Rosen, Kenneth H., Middletown, N.J. 07748 (US)
(74) Representative: KUHNEN, WACKER & PARTNER

(57) **Abstract**

A communications system is provided in which a calling party can retrieve directory information for placing multimedia calls from a World Wide Web server. The calling party selects the parties to be called by highlighting selected parties on displayed Web pages of directory information. The calling party can initiate a point-to-point multimedia call or a multiple party multimedia conference using the highlighted directory information.

## Description

### Field of the Invention

This invention relates to setting up point-to-point and multiparty multimedia calls using directory information provided over the World Wide Web.

### Background of the Invention

Multimedia conferencing allows users to meet face-to-face without traveling. Presently available multimedia conferencing terminals are suitable for desk top use and support simultaneous video, audio, and data communications.

When a party places a point-to-point multimedia call, a high-bandwidth connection between the calling party and the called party is established via the public switched telephone network (PSTN)₇ For example, Integrated Services Digital Network (ISDN) lines in the PSTN support realtime multimedia conferencing. To establish the high-bandwidth connection, the calling party must provide the multimedia terminal with the multimedia number of the party to be called, which is typically a 10 digit number analogous to a standard telephone number. Some multimedia terminals are capable of locally storing a list of known multimedia numbers. A calling party can choose a multimedia number from the list with the multimedia terminal when it is desired to place a multimedia call to that number. However, if the multimedia number of the party to be called has not been entered into the multimedia terminal, the party placing the call must manually look up the number. And if the party placing the call does not know the multimedia number of the party to be called, the calling party typically must make a separate telephone call to the party for this information, which can be inconvenient.

In addition, making a multimedia conferencing call (i.e., a multimedia call with three or more simultaneous parties) requires the calling party to ascertain the multimedia numbers of each of the parties and requires the intervention of a multimedia operator. The calling party provides the multimedia operator with the multimedia numbers of the parties to be called and the time at which it is desired to have the multimedia conference. The multimedia operator manually checks a special scheduling computer (a bridge manager) to determine whether sufficient multimedia conferencing capabilities are available on the multimedia bridge to be used to support the conference. The multimedia operator then arranges for the multimedia bridge to establish suitable connections between the various parties at the prearranged time for the multimedia conference. Although it is possible to arrange multimedia conferences in this way, using the services of a multimedia operator can be cumbersome.

It is therefore an object of the present invention to provide improved techniques for establishing point-to-point and multiparty multimedia calls.

### Summary of the Invention

This and other objects of the invention are accomplished in accordance with the principles of the present invention by providing a communications system in which a calling party can retrieve directory information for placing multimedia calls from a Web server connected to the Internet. The directory information preferably includes each listed party's name and corresponding multimedia number or other suitable addressing information. In addition, the directory information may include prestored images of each listed party, e-mail addresses, telephone numbers, fax numbers, and home or business mailing addresses. A party desiring to make a multimedia call accesses the directory information by looking up the appropriate Web pages on the Web server. The Web pages containing the directory information are displayed on the calling party's workstation. Because the directory information is available in a single comprehensive database, the calling party can readily identify the multimedia number of any of the listed parties.

The calling party selects the parties to be called by highlighting entries for selected parties on the displayed Web pages. The calling party can initiate a point-to-point multimedia call or a multiparty multimedia conference using the highlighted directory information. Initiating a point-to-point call by highlighting directory information is a convenient way in which to place a multimedia call to a party without needing to know the party's multimedia number before making the call. Establishing multiparty multimedia conference calls by highlighting multiple parties from the displayed directory information eliminates the need to call a multimedia operator to arrange a multimedia conference.

To place a point-to-point multimedia call, the calling party's workstation uses the multimedia number for the selected party to be called to establish a multimedia call connection. If desired, the calling party's workstation can directly place a multimedia call to the workstation of the party to be called using the public switched telephone network. Alternatively, a multimedia call connection with the workstation of the party to be called can be established using the public switched telephone network and a multimedia bridge system.

If a multimedia conference between multiple parties is desired, the calling party selects the parties to be called and selects the desired time for the conference from the directory information Web pages. The desired time and the multimedia numbers for the parties selected from the Web pages are preferably sent to the Web server in the form of a request to establish the multimedia conference. The Web server submits the request to the multimedia bridge system, which establishes the multimedia conference between the calling party and selected parties at the desired time. If desired, the workstation can submit the request to establish the multimedia conference directly to the multimedia bridge.

Further features of the invention, its nature and various advantages will be more apparent from the accompanying drawings and the following detailed description of the preferred embodiments.

### Brief Description of the Drawings

FIG. 1 is a block diagram of a communications system that supports multimedia conferencing in accordance with the principles of the present invention.

FIG. 2 is a flow chart of steps used in setting up multimedia calls in accordance with the present invention.

FIG. 3 is a block diagram of a communications system using a gateway server to access the Internet in accordance with the present invention.

### Detailed Description of the Preferred Embodiments

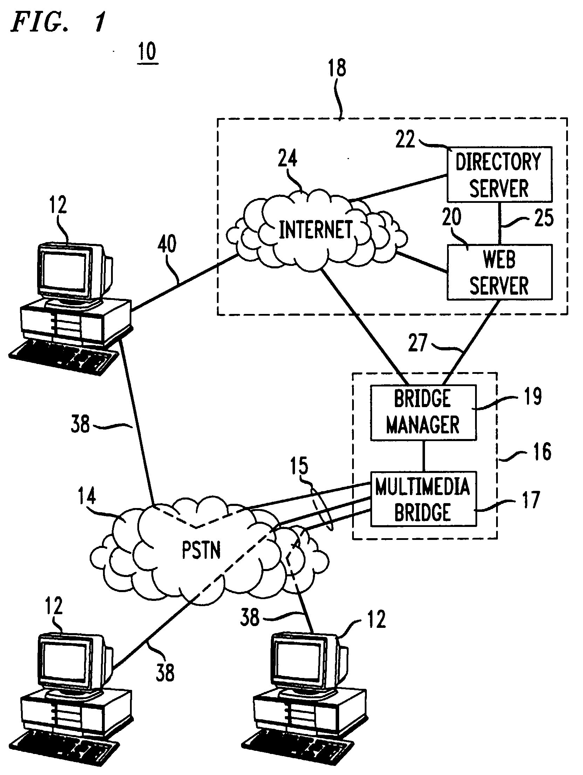

A communications system 10 in accordance with the present invention is shown in FIG. 1. Point-to-point multimedia calls can be made between workstations 12 via public switched telephone network (PSTN) 14. Multimedia calls can contain separate video, audio, and data components. Any suitable technique for supporting multimedia calls may be used. For example, Integrated Services Digital Network lines within PSTN 14 may be used to provide the communication pathways needed to communicate the contents of the multimedia calls between workstations. Compression schemes can be used to reduce the bandwidth requirements of the system. Simultaneous multimedia calls are supported by multimedia bridge system 16, which is connected to PSTN 14 via ISDN lines 15. Together, PSTN 14 and multimedia bridge system 16 (and their associated communication lines, such as ISDN lines 15 and 38) make up a "transport network."

Multimedia bridge system 16 contains multimedia bridge 17 and bridge manager 19. Multimedia bridge 17 is a multiport switch capable of simultaneously interconnecting multiple multimedia calls. During a multimedia conference, each participating workstation 12 is connected to a separate port of multimedia bridge 17. Bridge manager 19 performs scheduling functions and controls the set up and operation of multimedia bridge 17.

Data network 18 provides directory information to workstations 12 and allows workstations 12 to set up multimedia calls and multimedia conferences without the intervention of a multimedia operator. Preferably, data network 18 is based on the Internet, which allows workstations 12 to access information using a World Wide Web ("Web") browser. The directory information provided by data network 18 preferably includes each listed party's name and corresponding multimedia number or other suitable addressing information. Because the directory information can be accessed by any workstation 12, data network 18 provides a single comprehensive source from which a caller can obtain multimedia numbers.

If desired, additional directory information can be provided, such as a prestored image of the listed party, e-mail address, telephone number, fax number, and home or business mailing address. Preferably, data network 18 provides directory services using Web server 20 and directory server 22. Web server 20 accesses directory server 22 via Internet 24 or via direct line 25 to obtain directory information. Web server 20 supplies corresponding Web pages to workstations 12 via the Internet 24. If desired, directory server 22 and Web server 20 can be co-located. Additional directory servers and Web servers can be included in system 10 as needed.

To initiate a point-to-point multimedia call or a multimedia conference the calling party looks up the multimedia call directory information on Web server 20. Various data fields of directory information are displayed as Web pages on the calling party's workstation 12. The calling party selects the party or parties to be called from the Web pages of displayed directory information using any suitable user interface at workstation 12. For example a mouse-based pointer can be used to highlight the desired parties. A point-to-point multimedia call or a multimedia conference can be established based on the selected directory information.

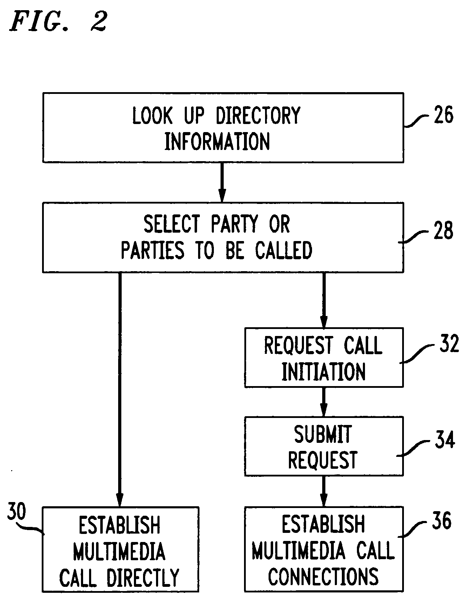

Some of the steps involved in setting up point-to-point multimedia calls and multimedia conferences are shown in FIG. 2. At step 26 the calling party looks up directory information for the party or parties to be called by requesting that directory information be provided as Web pages at the calling party's workstation 12. The calling party selects the party or parties to be called from the Web pages at step 28. Each selected entry contains multimedia number information for the selected party.

If a multimedia call is to be placed to a single party the calling party's workstation 12 uses the multimedia number information for the selected party to establish a multimedia call connection with that party. If desired, the calling party's workstation 12 can directly place the multimedia call to the selected party's workstation 12 via PSTN 14 at step 30. Alternatively, a multimedia call connection with the called party's workstation 12 can be established via SPTN 14 and multimedia bridge system 16 at steps 32,34, and 36. To establish a connection using multimedia bridge system 16, a request to initiate the call indicating the selected party's multimedia number or other address information is preferably sent from the calling party's workstation 12 to Web server 20 via Internet 24 at step 32. Web server 20 submits the request to multimedia bridge system 16 via Internet 24 or direct line 27 at step 34. If desired, the request can be sent to multimedia bridge system 16 directly from the calling party's workstation 12. At step 36, the requested multimedia call connection between the calling party and the selected parties is established by multimedia bridge system 16.

If a multimedia conference between multiple parties is desired, at step 28 the calling party selects the parties to be called and selects the desired time for the conference (i.e., immediately or at some later time) from the directory information displayed on the calling party's workstation 12 as Web pages. At step 32, the desired time and the multimedia number or other multimedia call address information for each of the parties selected from the Web pages is sent to Web server 20 as a request to establish the multimedia conference. Web server 20 submits the request to multimedia bridge system 16 via Internet 24 or direct line 27 at step 34. A multimedia conference will be established at step 36, provided that PSTN 14 and multimedia bridge system 16 have sufficient capacity to interconnect the calling party and the selected parties at the desired time.

With the arrangement of FIG. 1, each calling workstation 12 has two physical communications paths: path 38 connected to PSTN 14 and path 40 connected to data network 18. Path 38 is preferably a high-bandwidth path 38 such as an ISDN line. Path 40 is typically a low-bandwidth pathway, such as a plain old telephone service (POTS) line or a local area network connection, but may be an ISDN line, if desired. In FIG. 1, path 40 is only shown connecting one of workstations 12 to data network 18, to illustrate that workstations 12 can receive multimedia calls without path 40.

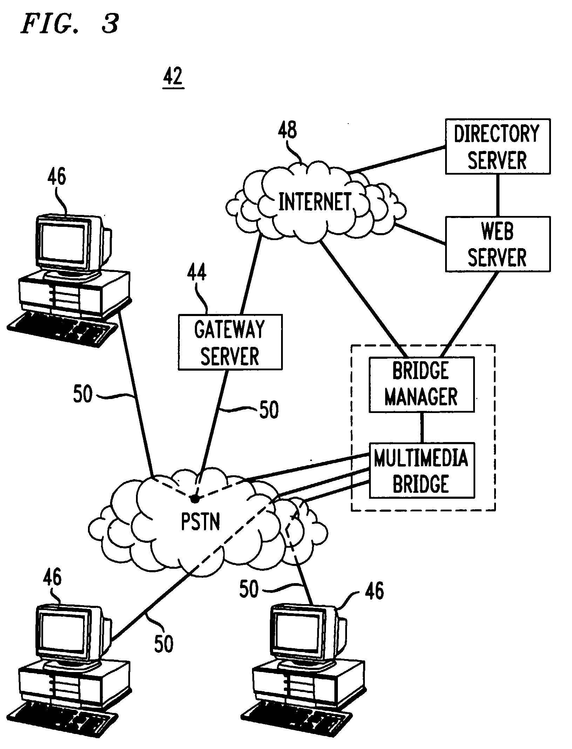

An alternative to the arrangement of FIG. 1 is shown in FIG. 3. As shown in FIG. 3, communications system 42 is identical to communications system 10 (FIG. 1), except that gateway server 44 is provided to allow one of workstations 46 access to Internet 48 without the use of path 40 (FIG. 1). Gateway server 44 eliminates the need for workstations 46 to have connections for two separate communication paths and allows workstations equipped solely with communication paths such as ISDN lines 50 to access Internet 48 to obtain directory information and to set up multimedia calls. In FIG. 3, path 50 is only shown connecting one of workstations 46 to gateway server 44 to illustrate that workstations 46 can receive multimedia calls without a connection to Internet 48. If desired, the other workstations 46 can be connected to Internet 48 via a gateway server such as gateway server 44. The use of gateway server 44 to provide Internet access through an ISDN or comparable high-bandwidth path is described in commonly-assigned co-pending United States patent application Serial No. 08/547,216, filed October 24, 1995, which is hereby incorporated by reference herein.

The foregoing is merely illustrative of the principles of this invention and various modifications can be made by those skilled in the art without departing from the scope and spirit of the invention.

## Claims

1. A method for setting up multimedia calls over a transport network, comprising the steps of:
supplying directory information with a server to a data network distinct from the transport network for a calling party to receive and display on a workstation; and
establishing a multimedia call over the transport network between the calling party and at least one party selected by the calling party from the directory information displayed on the workstation.

2. The method defined in claim 1 further comprising the step of receiving a request from the calling party with the server to establish the multimedia call with the at least one selected party.

3. The method defined in claim 2 wherein:
the step of receiving the request comprises the step of receiving a request from the calling party to establish a multimedia call with a plurality of parties selected by the calling party from the displayed directory information; and
the step of establishing the multimedia call comprises the step of establishing a multimedia call over the transport network between the calling party and the plurality of selected parties.

4. The method defined in claim 1 wherein the data network contains the Internet and the server is a Web server, the step of supplying the directory information comprising the step of supplying at least one Web page to the Internet.

5. The method defined in claim 1 wherein the transport network contains a public switched telephone network having Integrated Services Digital Network lines for interconnecting the calling party and the at least one selected party.

6. The method defined in claim 1 her comprising the step of establishing the multimedia call by connecting the calling party and the at least one selected party using a multimedia bridge system.

7. A system for setting up multimedia calls over a transport network, comprising:
means for supplying directory information to a data network distinct from the transport network for a calling party to receive and display on a workstation; and
means for establishing a multimedia call over the transport network between the calling party and at least one party selected by the calling party from the directory information displayed on the workstation.

8. The system defined in claim 7 further comprising means for receiving a request from the calling party to establish the multimedia call with the at least one selected party.

9. The system defined in claim 8 wherein:
the means for receiving the request comprises means for receiving a request from the calling party to establish a multimedia call with a plurality of parties selected by the calling party from the displayed directory information; and
the means for establishing the multimedia call comprises means for establishing a multimedia call over the transport network between the calling party and the plurality of selected parties.

10. The system defined in claim 7 wherein the data network contains the Internet, the means for supplying the directory information comprising means for supplying at least one Web page to the Internet.

11. The system defined in claim 7 wherein the transport network contains a public switched telephone network having Integrated Services Digital Network lines for interconnecting the calling party and the at least one selected party.

12. The system defined in claim 7 further comprising multimedia bridge system means for connecting the calling party and the at least one selected party.

13. A system for setting up multimedia calls over a transport network, comprising:
a server for supplying directory information to a data network distinct from the transport network for a calling party to receive and display on a workstation; and
a multimedia bridge system for establishing a multimedia call over the transport network between the calling party and at least one party selected by the calling party from the directory information displayed on the workstation.

14. The system defined in claim 13 wherein the server receives a request from the calling party to establish a multimedia call with the at least one selected party.

15. The system defined in claim 14 wherein:
the request received by the server is a request from the calling party to establish a multimedia call with a plurality of parties selected by the calling party from the displayed directory information; and
the multimedia bridge system establishes a multimedia call over the transport network between the calling party and the plurality of selected parties.

16. The system defined in claim 13 wherein:
the data network contains the Internet;
the server is a Web server; and
the directory information is supplied by the Web server to the Internet as at least one Web page.

17. The system defined in claim 13 wherein the transport network contains a public switched telephone network having Integrated Services Digital Network lines for interconnecting the calling party and the at least one selected party.
